# FASCICULE DE BREVET EUROPEEN

(11) **EP 1 740 407 B1**
(45) Date de publication et mention de la délivrance du brevet: **22.08.2007**
(21) Numéro de dépôt: 05746987.6
(22) Date de dépôt: 15.04.2005
(51) Int. Cl.: B60K 6/04

(54) **TRANSMISSION INFINIMENT VARIABLE A DERIVATION DE PUISSANCE A DEUX MODES DE FONCTIONNEMENT POUR VEHICULE AUTOMOBILE**
UNENDLICH VARIABLE BYPASS-LEISTUNGSÜBERTRAGUNG MIT ZWEI BETRIEBSMODI FÜR EIN KRAFTFAHRZEUG
INFINITELY VARIABLE POWER BYPASS TRANSMISSION WITH TWO OPERATING MODES FOR A MOTOR VEHICLE

(30) Priorité: 20.04.2004 FR 0404173
(43) Date de publication de la demande: 10.01.2007
(73) Titulaire: RENAULT s.a.s., 92100 Boulogne Billancourt (FR)
(72) Inventeur: FOURNIER, Vincent, F-92300 Levallois Perret (FR); PICHON, Yves, F-92190 Meudon (FR)
(86) Numéro de dépôt international: PCT/FR2005/050249
(87) Numéro de publication internationale: WO 2005/105502

(56) Documents cités:
- EP-A- 1 122 110
- EP-A- 1 275 551
- WO-A-02/47931
- WO-A-02/081246
- FR-A- 2 804 911
- FR-A- 2 818 346
- FR-A- 2 823 281
- US-A1- 2002 024 306
- US-A1- 2002 098 941
- US-B1- 6 258 006

## Description

La présente invention est relative à une transmission infiniment variable à dérivation de puissance à deux modes de fonctionnement, pour véhicule automobile équipé d'un moteur thermique.

Une telle transmission à dérivation de puissance permet d'obtenir une variation continue depuis un rapport de marche arrière jusqu'à un rapport de marche avant, en passant par une position particulière dite « neutre en prise », où la vitesse de déplacement du véhicule est nulle, pour un régime quelconque du moteur thermique.

Les transmissions à dérivation de puissance sont de plusieurs types.

Selon un premier type dit « à entrée couplée », la transmission comporte un couple de pignons de dérivation de puissance qui dérivent la puissance à l'entrée du mécanisme et un train d'engrenages épicycloïdal « rassembleur » qui réunit les puissances en sortie du mécanisme. La transmission comporte également un variateur de vitesse.

Dans un autre type dit « à sortie couplée », la transmission comporte un train d'engrenages épicycloïdal diviseur de puissance à l'entrée du mécanisme et un couple de pignons rassembleurs de puissance en sortie du mécanisme. La transmission comporte également un variateur de vitesse.

Enfin, on connaît également des transmissions à dérivation de puissance dites « à deux points d'adaptation », dans lesquelles un premier train d'engrenages épicycloïdal diviseur de puissance est placé à l'entrée de la transmission, tandis qu'un second train d'engrenages épicycloïdal rassembleur de puissance est monté en sortie de la transmission. Là encore, la transmission comporte un variateur de vitesse.

Une transmission infiniment variable (TIV ou IVT en langue anglaise) n'utilise qu'un ou deux de ces trois principes de fonctionnement.

La présente invention est relative à une transmission infiniment variable utilisant deux modes de fonctionnement distincts et comportant un dispositif de changement de mode permettant de passer d'un premier mode de fonctionnement à un deuxième mode de fonctionnement.

On comprend qu'il est intéressant de disposer de deux modes de fonctionnement pour une même transmission, car cela permet d'augmenter la plage des rapports de la transmission et permet en outre de diminuer les dimensions du dispositif variateur de vitesse qui peut comprendre des machines électriques.

De telles architectures de transmission bi-mode, de type connu, présentent cependant l'inconvénient que les changements de mode sont effectués par des embrayages multi-disques disposés sur la sortie de la transmission, de sorte que leur fonctionnement s'accompagne de brusques variations de couple qui sont ressenties désagréablement par les utilisateurs. Un autre inconvénient d'une telle transmission décrite par exemple dans le brevet US-A-5 558 589 ou dans le brevet US-A-5 935 035, réside dans la complexité de l'architecture, liée notamment à la présence d'au moins deux embrayages et un frein.

Dans une précédente demande de brevet français FR 02 14 241 au nom de la demanderesse, on a décrit une transmission infiniment variable à deux modes de fonctionnement, du type comportant un variateur électrique et au moins deux voies de dérivation de puissance dont une voie principale relie le moteur thermique aux roues motrices, et une voie secondaire est connectée au variateur électrique, de sorte qu'au moins deux modes de fonctionnement peuvent être appliqués sur la voie de dérivation de puissance du variateur électrique.

La transmission infiniment variable décrite dans cette demande de brevet antérieure comprend un premier train d'engrenages épicycloïdal composé qui permet de connecter le moteur thermique aux roues du véhicule selon une voie principale de dérivation de puissance et un train d'engrenages épicycloïdal simple qui permet de réaliser la dérivation de puissance ainsi qu'un deuxième train d'engrenages épicycloïdal composé, de façon à réaliser un système de changement de mode entre au moins deux modes de fonctionnement de la transmission infiniment variable.

La transmission décrite dans cette demande de brevet antérieure comprend deux dispositifs de couplage/découplage qui permettent à deux arbres de la transmission d'être indépendamment bloqués ou non en rotation, assurant ainsi chaque fois l'un des modes de fonctionnement de la transmission.

Lors d'un changement de mode, les deux dispositifs de couplage/découplage sont pilotés indépendamment par deux actionneurs qui peuvent être mus par une force électrique ou une force hydraulique. La commande des deux actionneurs se fait de sorte que les deux modes soient engagés simultanément, les deux arbres précités de la transmission étant simultanément bloqués en rotation. Une autre transmission avec une architecture similaire est décrite par le brevet FR 2 823 281 A, qui définie le préambule de la revendication 1.

La présente invention a pour objet de simplifier ces architectures de façon à réduire l'encombrement de la transmission ainsi que son coût de fabrication.

La présente invention a également pour objet une transmission infiniment variable à deux modes de fonctionnement, dans laquelle le basculement entre les deux modes de fonctionnement se fait de manière particulièrement simple.

La transmission infiniment variable à dérivation de puissance à deux modes de fonctionnement selon l'invention, adaptée en particulier à un véhicule automobile équipé d'un moteur thermique, est du type comprenant :
- au moins deux voies de puissance reliant en parallèle le moteur thermique aux roues du véhicule et contenant chacune un dispositif de couplage/découplage capable de bloquer ou libérer un arbre de la transmission selon le mode de fonctionnement ;
- une voie contenant un variateur de vitesse continu ;
- et un dispositif de commande de changement de mode capable de commander l'actionnement des dispositifs de couplage/découplage.

La transmission comprend un actionneur unique pour les deux dispositifs de couplage/découplage capable, lors d'un changement de mode, d'engager simultanément les deux modes en bloquant les deux arbres de la transmission.

Il en résulte une simplification notable par rapport aux transmission classiques de ce type dans lesquelles il était nécessaire de prévoir une commande complexe pour deux actionneurs indépendants.

L'actionneur unique est de préférence du type à crabots et peut être entraîné par une force hydraulique ou par une force électrique.

L'actionneur est monté de façon à être mobile en translation parallèlement aux deux arbres de la transmission.

Dans un mode de réalisation préféré, l'actionneur comprend deux ensembles de dents de crabot capables de s'engager respectivement avec deux ensembles de dents de crabot correspondants solidaires des deux arbres de la transmission.

De préférence, les deux ensembles de dents de crabot de l'actionneur sont axialement décalés l'un par rapport à l'autre de façon à pouvoir coopérer simultanément avec les ensembles de dents de crabot correspondants des deux arbres de la transmission dans une position de l'actionneur et à pouvoir coopérer alternativement avec l'un des ensembles de dents de crabot correspondants des deux arbres de la transmission dans d'autres positions de l'actionneur.

Lors d'un changement de mode, les deux arbres de la transmission sont ainsi, de manière simple et efficace, bloqués en rotation simultanément. Au contraire, pour chaque mode, l'un des deux arbres est libre en rotation tandis que l'autre est bloqué en rotation.

Dans un mode de réalisation avantageux de la transmission, le variateur de vitesse continu est de type électrique.

Un tel variateur de vitesse peut comprendre deux machines électriques de traction ou une machine électrique de traction et un moteur électrique de variateur, notamment pour réaliser un groupe motopropulseur hybride.

Les deux voies de puissance comprennent avantageusement chacune un train d'engrenages épicycloïdal diviseur de puissance dont un organe est relié à l'un des dispositifs de couplage/découplage.

Un train d'engrenages épicycloïdal rassembleur de puissance est avantageusement monté en sortie de la transmission. Il peut comporter un arbre de sortie relié aux roues du véhicule, les arbres de sortie des trains diviseur de puissance et du variateur de vitesse étant connectés à l'entrée dudit train rassembleur.

L'invention sera mieux comprise à l'étude d'un mode de réalisation pris à titre d'exemple nullement limitatif et illustré par les dessins annexés, sur lesquels :
- la figure 1 illustre schématiquement les principaux éléments d'une transmission infiniment variable à deux modes de fonctionnement selon l'invention ;
- la figure 2 est un graphe montrant le passage d'un mode de fonctionnement à un autre , et
- les figures 3 à 5 illustrent les différentes positions de l'actionneur unique selon un mode de réalisation, l'ensemble étant vu en coupe schématique et partielle.

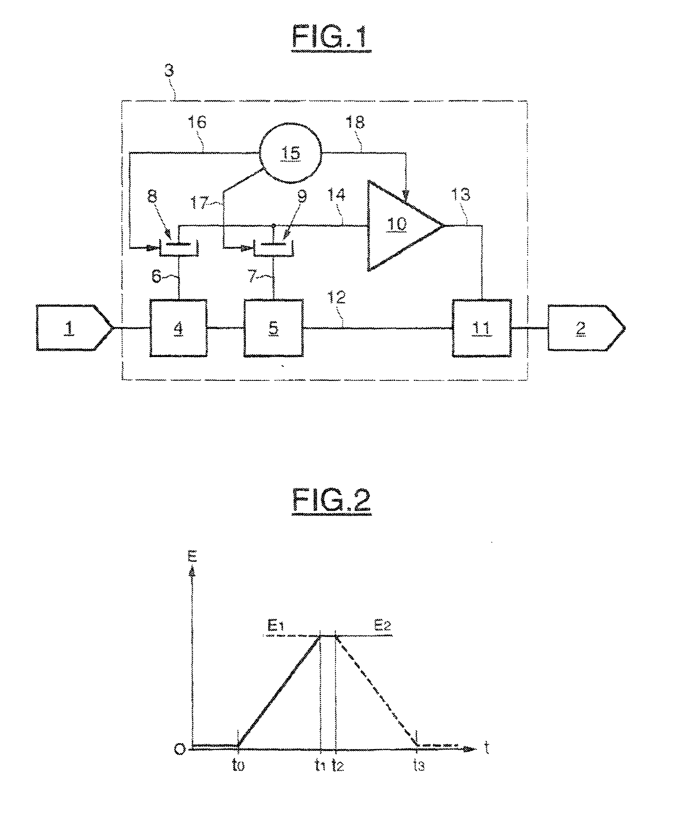

La figure 1 illustre schématiquement les principaux éléments d'un mode de réalisation d'une transmission selon l'invention. Un moteur thermique 1 constitue un groupe motopropulseur d'un véhicule automobile. L'essieu des roues motrices du véhicule, schématisé par le bloc 2, constitue l'élément entraîné. Entre l'élément entraîné 2 et le moteur thermique 1, est disposée la transmission infiniment variable, référencée 3 dans son ensemble.

La transmission 3 comprend deux voies de puissance reliant en parallèle le moteur thermique 1 aux roues 2 du véhicule. Chacune de ces deux voies de puissance comprend un train d'engrenages épicycloïdal diviseur de puissance 4, 5, dont un arbre secondaire 6, 7 peut être bloqué en rotation ou libéré par un dispositif de couplage/découplage 8, 9.

La transmission comprend également une voie de puissance contenant un variateur de vitesse continu schématisé par la référence 10. Un train d'engrenages épicycloïdal 11 joue le rôle d'un élément rassembleur de puissance de l'ensemble des voies de puissance. A cet effet, les arbres de sortie 12 des trains diviseurs de puissance 4, 5 et l'arbre de sortie 13 du variateur de vitesse 10 sont connectés à l'entrée du train rassembleur de puissance 11.

Les arbres secondaires 6, 7 des deux trains diviseurs de puissance 4, 5 peuvent être reliés mécaniquement à l'arbre d'entrée 14 du variateur de vitesse 10 lorsque les dispositifs de couplage/découplage 8, 9 sont actionnés, de façon à bloquer en rotation l'un ou l'autre des arbres 6, 7.

La transmission 3 comprend également un dispositif de commande 15 pour le changement de mode, capable de commander l'actionnement des deux dispositifs de couplage/découplage 8, 9, les voies de commande étant schématisées par les références 16 et 17 sur la figure 1. Le dispositif de commande 15 est également capable de commander par la connexion 18 le variateur de vitesse 10.

Le dispositif de commande 15 de changement de mode est capable de commander, pendant la durée d'un changement de mode, les deux dispositifs de couplage/découplage 8, 9, de façon à faire coexister pendant cette période les deux modes de transmission de puissance.

La figure 2 illustre, par un diagramme temporel, l'état d'engagement E des deux dispositifs de couplage/découplage 8, 9. L'état du dispositif de couplage/découplage 8, référencé E₁ sur la figure 2, et l'état du dispositif de couplage/découplage 9, référencé E₂ sur la figure 2, sont complémentaires entre les temps t₀ et t₁, ainsi qu'entre les temps t₂ et t₃. Au contraire, entre les temps t₁ et t₂, les deux dispositifs de couplage/découplage 8, 9, dont l'état respectif est E₁ et E₂, sont simultanément engagés, permettant ainsi de procéder au changement de mode.

Les dispositifs de couplage/découplage 8, 9 peuvent être réalisés de différentes manières.

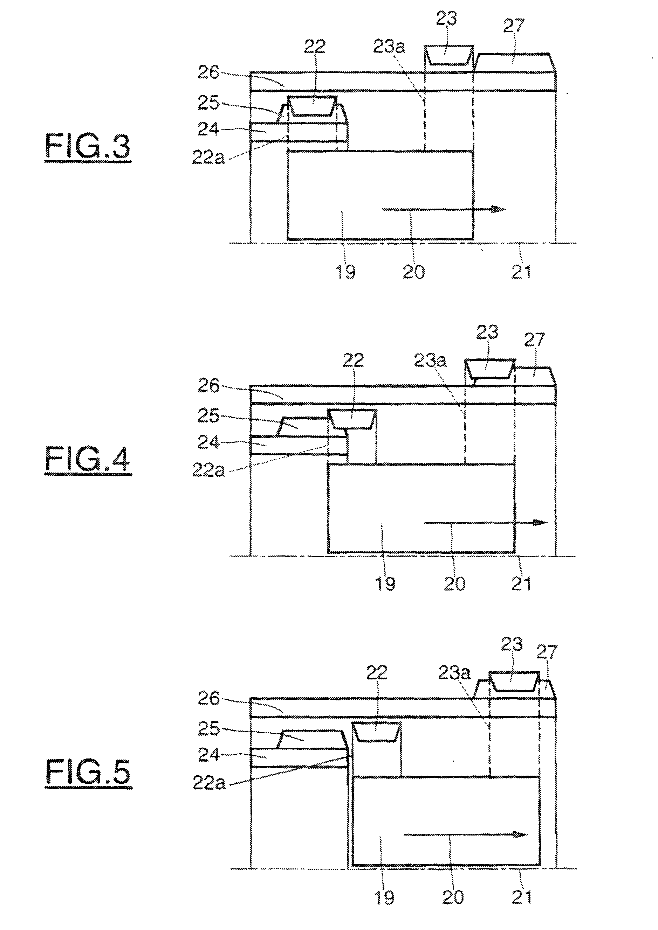

Dans un mode de réalisation préféré, illustré sur les figures 3 à 5, il est prévu un actionneur unique 19, pour les deux dispositifs de couplage/découplage 8, 9 de la figure 1. L'actionneur 19 est du type à crabot et est mobile en translation selon la flèche 20, parallèlement à l'axe 21 des deux arbres de transmission 6, 7, schématiquement indiqués sur la figure 1. L'actionneur 19 présente un premier ensemble de dents de crabot 22 et un deuxième ensemble de dents de crabot 23 axialement décalé par rapport au premier ensemble. L'arbre secondaire 6 est solidaire d'une pièce annulaire 24 qui porte un ensemble de dents de crabot 25 complémentaires des dents de crabot 22 et capables de coopérer avec celles-ci. De la même manière, l'arbre secondaire 7 est solidaire d'un organe annulaire 26 qui porte un ensemble de dents de crabot 27 capables de coopérer avec les dents de crabot 23.

On notera que, dans l'exemple illustré, les deux ensembles de dents de crabot 22, 23 sont montés à l'intérieur de deux organes annulaires 22a, 23a solidaires de l'actionneur 19. Les deux ensembles de dents de crabot 25 et 27 sont, quant à eux, disposés à la périphérie extérieure des organes annulaires respectifs 24 et 26.

Le dispositif actionneur 19 fonctionne de la manière suivante.

Sur la figure 3, l'actionneur 19 se trouve dans une première position, dans laquelle les dents de crabot 22 sont en prise avec les dents de crabot 25. Au contraire, les dents de crabot 23 sont complètement dégagées des dents de crabot 27. L'organe annulaire 24 solidaire de l'arbre 6 est donc bloqué en rotation, alors que l'élément annulaire 26 solidaire de l'arbre 7 est libre. Un déplacement en translation rectiligne, dans le sens de la flèche 20 de la figure 3, déplace les deux ensembles de dents de crabot 22, 23 dans la position illustrée sur la figure 4. Dans cette position, compte tenu du décalage axial choisi pour les dents 22 par rapport aux dents 23, il apparaît que les dents de crabot 22 sont en partie en prise avec les dents de crabot 25, tandis que les dents de crabot 23 sont en partie en prise avec les dents de crabot 27. Dans cette position intermédiaire, les deux arbres 6, 7 se trouvent donc bloqués en rotation par l'actionneur 19. Cette position correspond à la phase de changement de mode de la transmission. Les deux modes sont en effet simultanément engagés. Un seul mouvement de translation rectiligne de l'actionneur unique 19 permet ainsi de basculer d'un premier mode à une phase d'engagement simultanée de deux modes.

Une poursuite du mouvement de translation rectiligne dans le sens de la flèche 20 place l'actionneur 19 dans la position illustrée sur la figure 5, dans laquelle les dents de crabot 22 sont dégagées des dents de crabot 25, tandis que les dents de crabot 23 sont engagées avec les dents de crabot 27. Dans cette position, le deuxième mode de la transmission se trouve donc engagé.

Le mouvement de translation rectiligne de l'actionneur unique 19 peut être obtenu au moyen d'un dispositif d'actionnement linéaire électrique ou par l'action d'une force hydraulique.

Bien que l'on ait illustré dans cet exemple l'utilisation d'un actionneur muni de dents de crabot, on comprendra qu'il serait possible d'utiliser d'autres types de dispositifs de couplage/découplage, tels que des embrayages, en particulier à commande hydraulique.

Dans l'exemple illustré, on a indiqué que l'actionneur unique était bloqué en rotation. On comprendra, bien entendu, que l'actionneur puisse également être lié à un autre arbre de la transmission suivant la cinématique choisie.

## Revendications

1. Transmission infiniment variable à dérivation de puissance à deux modes de fonctionnement pour véhicule automobile équipé d'un moteur thermique, du type comprenant :
- au moins deux voies de puissance reliant en parallèle le moteur thermique aux roues du véhicule et contenant chacune un dispositif de couplage/découplage (8, 9) capable de bloquer ou libérer un arbre (6, 7) de la transmission selon le mode de fonctionnement ;
- une voie contenant un variateur de vitesse continu (10) ;
- et un dispositif de commande (15) de changement de mode capable de commander l'actionnement des dispositifs de couplage/découplage et d'engager simultanément les deux modes en bloquant les deux arbres de la transmission, lors d'un changement de mode ;
**caractérisée par le fait qu'**elle comprend un actionneur unique (19) pour les deux dispositifs de couplage/découplage.

2. Transmission selon la revendication 1, **caractérisée par le fait que** l'actionneur (19) est du type à crabots.

3. Transmission selon les revendications 1 ou 2, **caractérisée par le fait que** l'actionneur est entraîné par une force hydraulique.

4. Transmission selon les revendications 1 ou 2, **caractérisée par le fait que** l'actionneur est entraîné par une force électrique.

5. Transmission selon l'une quelconque des revendications précédentes, **caractérisée par le fait que** l'actionneur est mobile en translation parallèlement aux deux arbres de la transmission.

6. Transmission selon l'une quelconque des revendications précédentes, **caractérisée par le fait que** l'actionneur (19) comprend deux ensembles de dents de crabot (22, 23) capables de s'engager respectivement avec deux ensembles de dents de crabot (25, 27) correspondants solidaires des deux arbres de la transmission.

7. Transmission selon la revendication 6, **caractérisée par le fait que** les deux ensembles de dents de crabot de l'actionneur sont axialement décalés l'un par rapport à l'autre de façon à pouvoir coopérer simultanément avec les ensembles de dents de crabot correspondants des deux arbres de la transmission dans une position de l'actionneur et à pouvoir coopérer alternativement avec l'un des ensembles de dents de crabot correspondants des deux arbres de la transmission dans d'autres positions de l'actionneur.

8. Transmission selon l'une quelconque des revendications précédentes, **caractérisée par le fait que** le variateur de vitesse continu (10) est de type électrique.

9. Transmission selon la revendication 8, **caractérisée par le fait que** le variateur de vitesse comprend deux machines électriques de traction ou une machine électrique de traction et un moteur électrique de variateur, notamment pour réaliser un groupe motopropulseur hybride.

10. Transmission selon l'une quelconque des revendications précédentes, **caractérisée par le fait que** les deux voies de puissance comprennent chacune un train d'engrenages épicycloïdal (4, 5) diviseur de puissance dont un organe est relié à l'un des dispositifs de couplage/découplage.

11. Transmission selon la revendication 10, **caractérisée par le fait qu'**elle comprend un train d'engrenages épicycloïdal (11) rassembleur de puissance comportant un arbre de sortie relié aux roues du véhicule, les arbres de sortie des trains diviseur de puissance et du variateur de vitesse étant connectés à l'entrée dudit train rassembleur.

## Claims

1. Infinitely variable power bypass transmission with two operating modes for a motor vehicle fitted with an internal combustion engine, of the type comprising:
- at least two power lines connecting in parallel the internal combustion engine to the wheels of the vehicle and each containing a coupling/decoupling device (8, 9) capable of locking or releasing a transmission shaft (6, 7) depending on the operating mode;
- a line containing a continuous speed variator (10) ;
- and a mode-changing control device (15) capable of controlling the actuation of the coupling/decoupling devices and of simultaneously engaging the two modes while locking the two transmission shafts, during a change of mode;
**characterized in that** it comprises a single actuator (19) for the two coupling/decoupling devices.

2. Transmission according to Claim 1, **characterized in that** the actuator (19) is of the dog clutch type.

3. Transmission according to Claims 1 or 2, **characterized in that** the actuator is driven by a hydraulic force.

4. Transmission according to Claims 1 or 2, **characterized in that** the actuator is driven by an electric force.

5. Transmission according to any one of the preceding claims, **characterized in that** the actuator can be moved in translation parallel to the two transmission shafts.

6. Transmission according to any one of the preceding claims, **characterized in that** the actuator (19) comprises two sets of dog clutch teeth (22, 23) capable of engaging respectively with two sets of matching dog clutch teeth (25, 27) fixedly attached to the two transmission shafts.

7. Transmission according to Claim 6, **characterized in that** the two sets of dog clutch teeth of the actuator are axially offset from one another so as to be able to interact simultaneously with the matching sets of dog clutch teeth of the two transmission shafts in one position of the actuator and to be able to interact alternately with one of the matching sets of dog clutch teeth of the two transmission shafts in other positions of the actuator.

8. Transmission according to any one of the preceding claims, **characterized in that** the continuous speed variator (10) is of the electric type.

9. Transmission according to Claim 8, **characterized in that** the speed variator comprises two traction electric machines or one traction electric machine and one variator electric motor, particularly for producing a hybrid power plant.

10. Transmission according to any one of the preceding claims, **characterized in that** the two power lines each comprise a power dividing epicyclic gear train (4, 5) of which one member is connected to one of the coupling/decoupling devices.

11. Transmission according to Claim 10, **characterized in that** it comprises a power combining epicyclic gear train (11) comprising an output shaft connected to the wheels of the vehicle, the output shafts of the power dividing trains and of the speed variator being connected to the input of said combining train.

## Patentansprüche

1. Unendlich variables Leistungsverzweigungsgetriebe mit zwei Betriebsmodi für ein mit einem Verbrennungsmotor ausgestattetes Kraftfahrzeug, von dem Typ, der aufweist:
- mindestens zwei Leistungskanäle, die parallel den Verbrennungsmotor mit den Rädern des Fahrzeugs verbinden und je eine Kopplungs-/Entkopplungsvorrichtung (8, 9) enthalten, die in der Lage ist, eine Welle (6, 7) des Getriebes je nach dem Betriebsmodus zu blockieren oder freizugeben;
- einen Kanal, der einen stufenlosen Drehzahlregler (10) enthält;
- und eine Steuervorrichtung (15) für die Modusänderung, die in der Lage ist, die Betätigung der Kopplungs-/Entkopplungsvorrichtungen zu steuern und gleichzeitig die beiden Modi einzuleiten, indem die zwei Wellen des Getriebes bei einer Modusänderung blockiert werden;
**dadurch gekennzeichnet, dass** es ein einziges Betätigungsglied (19) für die beiden Kopplungs-/Entkopplungsvorrichtungen aufweist.

2. Getriebe nach Anspruch 1, **dadurch gekennzeichnet, dass** das Betätigungsglied (19) vom Typ mit Kupplungsklauen ist.

3. Getriebe nach den Ansprüchen 1 oder 2, **dadurch gekennzeichnet, dass** das Betätigungsglied von einer hydraulischen Kraft angetrieben wird.

4. Getriebe nach den Ansprüchen 1 oder 2, **dadurch gekennzeichnet, dass** das Betätigungsglied von einer elektrischen Kraft angetrieben wird.

5. Getriebe nach einem der vorhergehenden Ansprüche, **dadurch gekennzeichnet, dass** das Betätigungsglied parallel zu den beiden Achsen des Getriebes translationsbeweglich ist.

6. Getriebe nach einem der vorhergehenden Ansprüche, **dadurch gekennzeichnet, dass** das Betätigungsglied (19) zwei Gruppen von Klauenzähnen (22, 23) aufweist, die in der Lage sind, je in zwei Gruppen von entsprechenden Klauenzähnen (25, 27) einzugreifen, die fest mit den zwei Wellen des Getriebes verbunden sind.

7. Getriebe nach Anspruch 6, **dadurch gekennzeichnet, dass** die zwei Gruppen von Klauenzähnen des Betätigungsglieds axial zueinander versetzt sind, um gleichzeitig mit den Gruppen von entsprechenden Klauenzähnen der zwei Wellen des Getriebes in einer Stellung des Betätigungsglieds zusammenwirken zu können und um alternativ mit einer der entsprechenden Gruppen von Klauenzähnen der zwei Wellen des Getriebes in anderen Stellungen des Betätigungsglieds zusammenwirken zu können.

8. Getriebe nach einem der vorhergehenden Ansprüche, **dadurch gekennzeichnet, dass** der stufenlose Drehzahlregler (10) vom elektrischen Typ ist.

9. Getriebe nach Anspruch 8, **dadurch gekennzeichnet, dass** der Drehzahlregler zwei elektrische Zugmaschinen oder eine elektrische Zugmaschine und einen elektrischen Reglermotor aufweist, insbesondere, um ein hybrides Antriebsaggregat zu bilden.

10. Getriebe nach einem der vorhergehenden Ansprüche, **dadurch gekennzeichnet, dass** die zwei Leistungskanäle je einen leistungsteilenden Planetengetriebezug (4, 5) aufweisen, von dem ein Organ mit einer der Kopplungs-/Entkopplungsvorrichtungen verbunden ist.

11. Getriebe nach Anspruch 10, **dadurch gekennzeichnet, dass** es einen leistungssammelnden Planetengetriebezug (11) aufweist, der eine Abtriebswelle enthält, die mit den Rädern des Fahrzeugs verbunden ist, wobei die Abtriebswellen der leistungsteilenden Getriebezüge und des Drehzahlreglers mit dem Eingang des sammelnden Getriebezugs verbunden sind.
